# EUROPEAN PATENT APPLICATION

(11) **EP 2 402 084 A2**
(43) Date of publication of application: **04.01.2012**
(21) Application number: 10746425.7
(22) Date of filing: 24.02.2010
(51) Int. Cl.: B01J 29/67, B01J 29/44, B01J 29/22, B01J 29/89

(54) **CATALYST, AND METHOD FOR REMOVING FORMALDEHYDE USING SAME**

(30) Priority: 25.02.2009 KR 20090015934
(71) Applicant: LG Hausys, Ltd., Seoul 150-721 (KR)
(72) Inventor: LEE, Ju-Hyung, Seoul 122-080 (KR); NAM, In-Sik, Pohang-si Gyeongsangbuk-do 790-751 (KR); JUNG, Seong-Moon, Daejeon 305-707 (KR); CHOI, Jong-Sik, Daejeon 305-728 (KR); KIM, Sun-Joo, Daejeon 305-340 (KR); LIM, Ho-Yeon, Yongin-si Gyeonggi-do 446-916 (KR); SEO, Joo-Hwan, Daejeon 305-340 (KR)
(74) Representative: Plougmann & Vingtoft A/S
(86) International application number: PCT/KR2010/001159
(87) International publication number: WO 2010/098586

(57) **Abstract**

The present invention relates to a catalyst including a ceramic structure containing porous ceramic paper and a catalyst component supported on the ceramic structure, and to a method for removing formaldehyde using the catalyst. The present invention provides a catalyst in which a structure made of ceramic paper having excellent characteristics in terms of porosity, specific surface area, and the like is used as a support for the catalyst component to maximize an effective area for reacting the supported catalyst component with a substance to be treated, thereby improving catalyst performance. The present invention also provides a method of using the catalyst.

## Description

### [Technical Field]

The present invention relates to a catalyst capable of effectively eliminating noxious gases such as formaldehyde and a method of eliminating formaldehyde using the same.

### [Background Art]

Chemical materials emitted from wall materials or flooring materials used in residences such as apartments, buildings, houses, schools, hospitals or offices may cause serious harm to humans. Thus, studies are being conducted into technologies capable of effectively eliminating the chemical materials.

A typical example of noxious chemical materials is aldehydes, for example, formaldehyde, which are generally contained in interior building materials, such as paint, wallpaper, plastic or synthetic resin flooring materials, carpets, and materials for windows or doors.

As a representative method of eliminating such noxious chemical materials, a catalyst containing a precious metal such as palladium, gold or silver supported on a metal oxide support such as titanium dioxide is used. The catalyst is generally supported on a cordierite ceramic structure for use.

For example, Japanese Unexamined Patent Publication No. 1997-94436 discloses a catalyst for oxidizing formaldehyde gas, in which a metal oxide support containing a precious metal is supported on a cordierite ceramic structure.

However, when the cordierite structure generally produced by an extruding process is used as a catalyst support, a catalytic reaction locally occurs only on a portion of the structure where the catalyst is exposed, causing significant deterioration of the overall capability of decomposing noxious substances.

### [Disclosure]

### [Technical Problem]

An aspect of the present invention is to provide a catalyst which includes a porous ceramic structure capable of optimizing decomposition capability of a catalyst component supported thereon, a catalyst containing a catalyst component supported on the porous ceramic structure, and a method of using the same.

### [Technical Solution]

In accordance with one aspect of the present invention, a catalyst includes a ceramic structure containing porous ceramic paper; and a catalyst component supported on the ceramic structure.

In accordance with another aspect of the present invention, a method of eliminating formaldehyde includes bringing the catalyst into contact with formaldehyde.

### [Advantageous Effects]

According to exemplary embodiments of the invention, a catalyst component is supported on a structure formed of ceramic paper having excellent properties in terms of porosity and specific surface area to maximize an effective area for reacting the supported catalyst component with a material to be treated, thereby improving performance of the catalyst.

### [Description of Drawings]

Fig. 1 is a view of a porous ceramic structure in accordance with an exemplary embodiment of the present invention; and
Fig. 2 is a graph depicting a conversion rate of formaldehyde according to space velocity of a chemical reactor and change in contact temperature in a method of eliminating formaldehyde in accordance with an exemplary embodiment of the present invention.

### [Mode for Invention]

The present invention relates to a catalyst including a ceramic structure containing porous ceramic paper; and a catalyst component supported on the ceramic structure.

A catalyst composition according to an exemplary embodiment of the invention will now be described in detail.

In the present invention, the ceramic structure formed of porous ceramic paper is used as a support structure containing the catalyst component.

The porous ceramic paper may be prepared, for example, by a well-known paper preparation process using various ceramic fibers. The ceramic structure formed of the porous ceramic paper has excellent productivity and allows easy control of pore characteristics, for example, the size of pores and porosity, as compared with conventional cordierite structures formed by extrusion.

Specifically, when a conventional cordierite structure formed by extrusion is used as a support of the catalyst component, catalysis locally occurs only on a portion of the structure where the catalyst component exists. However, when the porous ceramic paper is used, the supported catalyst remains fixed to the paper since the pore characteristics of the porous ceramic paper can be properly controlled, and a gas to be treated is diffused into the paper, thereby maximizing an effective contact area between the catalyst component and the reactant.

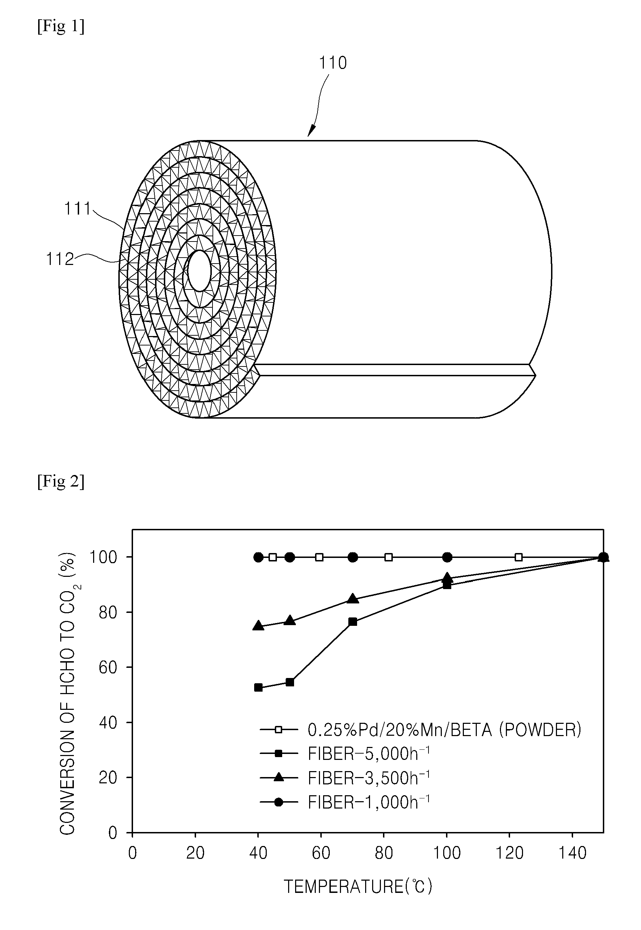

The ceramic structure may have, for example, a structure including corrugated ceramic paper 112 and a ceramic paper sheet 111 attached to the corrugated ceramic paper, as shown in Fig. 1. Due to the three-dimensional network structure of the ceramic structure, a reactive area of the included catalyst component may be further maximized. The corrugated ceramic paper and the ceramic paper sheet can also be collectively referred to as "ceramic paper" herein and can be produced using ceramic fibers.

In this embodiment, the ceramic fiber used to manufacture the ceramic paper may generally have a diameter of 1 to 6 µm and have an average length of 0.6 to 10 mm. If the length is less than 0.6 mm, strength of the ceramic paper can be reduced or a desired porosity cannot be obtained. If the length exceeds 10 mm, it is difficult to obtain uniform dispersion of fibers in a slurry material, so that the paper can be non-uniform or a desired porosity cannot be obtained.

In this embodiment, it is desirable that the ceramic fiber have excellent heat resistance. For examples, the ceramic fiber includes materials containing aluminum and/or silicon. Specifically, the ceramic fiber may include, but is not limited thereto, at least one selected from the group consisting of silica, alumina, silica-alumina, aluminosilicate, aluminoborosilicate, and mullite.

The ceramic paper may further include 5 to 30 parts by weight of an organic fiber based on 100 parts by weight of the ceramic fiber.

Examples of the organic fiber may include natural fibers such as softwood pulp, wood fiber, hemp, or the like; and synthetic fiber such as nylon, rayon, polyester, polypropylene, polyethylene, aramid, acryl, and the like. These organic fibers may be used alone or as mixtures of at least two kinds thereof.

The organic fiber may be present in an amount of 5 to 30 parts by weight based on 100 parts by weight of the ceramic fiber in the ceramic paper. If the amount of organic fiber is less than 5 parts by weight, it is difficult to maintain the tensile strength of the ceramic green paper, so that corrugation cannot be obtained in manufacture. If the amount exceeds 30 parts by weight, a porosity of the ceramic structure can be excessively increased or the strength of the structure can be reduced.
ceramic paper may further include 5 to 20 parts by weight of a binder along with the ceramic fiber and the organic fiber. An example of a suitable binder may include, without being limited to, an organic binder.

Examples of the binder include epoxy binders, sodium carboxymethyl cellulose (CMC), polyacrylamide (PAM), polyethylene oxide (PEO), methylcellulose, hydroxyethyl cellulose, refined starch, dextrin, polyvinyl alcohol, polyvinyl butyral, poly methyl (meth) acrylate, polyethylene glycol, paraffin, wax emulsions, and microcrystalline wax, which are used alone or as mixtures of at least two kinds thereof.

The binder may be present in an amount of 5 to 20 parts by weight based on 100 parts by weight of the ceramic fiber. If the amount of binder is less than 5 parts by weight, bonding strength between the fibers can be reduced. If the amount exceeds 20 parts by weight, the ceramic green paper can be increased in fluidity and adhesion, thereby reducing workability.

The ceramic paper including the above components may have a thickness of 200 to 500 µm. If the thickness of the ceramic paper is less than 200 µm, a space for containing the catalyst component and an area where the reactant is diffused in use of the structure can be decreased, thereby reducing activity of the catalyst. If the thickness is greater than 500 µm, an area where the reactant is diffused can increase too large, thereby increasing the amount of catalyst component which cannot participate in catalysis.

The ceramic paper may have a porosity of 60 to 90%. Herein, the term "porosity" means the volume of pores with respect to the total volume of the ceramic structure. If the porosity of the ceramic paper is less than 60%, the catalyst component to be supported on the structure can be reduced and diffusion efficiency of the reactant can be deteriorated. If the porosity exceeds 90%, too many pores are present in the ceramic paper, thereby reducing diffusion efficiency or an effective reactive area.

The porous ceramic structure described above may be manufactured by any known method.

For example, the porous ceramic structure may be manufactured by a method including: the first process of preparing corrugated ceramic paper by corrugating ceramic green paper; the second process of attaching the corrugated ceramic paper to a ceramic paper sheet; the third process of coating the ceramic paper with a binder; and the fourth process of baking the ceramic paper.

The ceramic green paper used in the first process may be produced using a slurry including ceramic fibers, organic fibers, and a binder. Here, the ceramic green paper may be produced by any known paper preparation method.

The kind and the content of the respective components forming the slurry have been described above. The slurry may be prepared by dissolving the components in a solvent, for example, water. The ceramic fiber may be present in an amount of 50 to 80 wt%, preferably 70 to 80 wt%, in the slurry, in terms of solid content. However, the content of ceramic fiber is not specifically limited so long as the concentration of slurry can be properly maintained to allow the overall process to be smoothly carried out.

In addition, for proper removal of water during manufacture of the ceramic green paper, a vacuum pump may be connected to a papermaking machine to remove excess water through the pump. Further, additional devices, such as a compressor, may be used to remove excess remaining water.

The slurry used for the ceramic green paper may further include a pH regulator to further improve adhesion of the binder or fiber components.

For example, the pH regulator may include, without being limited to, ammonium aluminum sulfate, also known as alum. The content of pH regulator is not specifically limited, but may be added in an amount so that the slurry maintains a pH of 5.5 to 6.5.

The preparation of the corrugated ceramic paper using the ceramic green paper may be performed by any corrugation method using, for example, a general corrugation machine. In this embodiment, a corrugation machine may have a depth of a valley of a drum of about 1 to 5 mm and a pitch of about 1 to 5 mm, and may be configured to allow adjustment of surface temperature and paper feed rate, without being limited thereto.

In the second process, the corrugated ceramic paper prepared as above is attached to the ceramic paper sheet. In the process, attachment of the corrugated ceramic paper to the ceramic paper sheet may be performed, for example, by disposing the ceramic paper sheet under the corrugated ceramic paper, applying an adhesive to a contact surface therebetween, and attaching the corrugated ceramic paper to the ceramic paper sheet. Here, the adhesive may be any adhesive used in the art.

In this embodiment, the ceramic green paper, prepared by attaching the corrugated ceramic paper to the ceramic paper sheet, is wound in a spiral shape or cylindrical shape, and then the third process is performed.

However, this process is only an illustrative example in manufacture of the ceramic structure. In the present invention, ceramic paper obtained by performing the following coating and/baking processes upon the above manufactured ceramic green paper may be used to manufacture the honeycomb structure.

In the third process, the prepared ceramic paper is coated with a binder. Through the binder coating process and the following baking process, the final structure in which the ceramic paper and the like coheres strongly and firmly by the coated binder is manufactured.

The binder may be any binder known in the art. Specifically, an inorganic binder precursor solution may be used as the binder.

When the inorganic binder precursor solution is used, the binder may be uniformly applied to a surface of the ceramic green paper through capillary action of the porous ceramic green paper and may increase bonding strength between the ceramic fibers in the baking process, thereby significantly improving overall mechanical strength of the structure.

Here, the inorganic binder precursor solution may include, without being limited to, at least one selected from the group consisting of a silica sol, silane solution, siloxane solution, alumina sol, zirconia sol, aluminum silicate solution, aluminum phosphate solution, and mixtures thereof.

In the third process, the ceramic paper may be coated with the binder by any known method, for example, impregnation, application, or spraying.

After application using the primary coating solution, the ceramic green paper is dried and subjected to baking. Here, drying may be performed at room temperature to 200°C. However, drying temperature and time are not specifically limited so long as the ceramic green paper can be sufficiently dried.

In the third process, coating with the binder and drying may be repeated a plurality of times to improve mechanical strength of the structure.

In the fourth process, the ceramic green paper prepared via the coating process is baked. When the inorganic binder precursor solution is used as the binder, the inorganic binder precursor solution uniformly applied to the ceramic green paper forms strong bonds between the fibers, thereby improving mechanical strength of the structure.

Here, the baking process may be performed under any condition, e.g., at 400 to 1200 °C in vacuum, inert gas or air. If the temperature is less than 400°C, there is a possibility of incomplete removal of organic components. If the temperature exceeds 1200°C, the strength can be decreased due to deformation of a component included in the coated layer.

The coating and/or baking processes may be performed only once, but the coating, drying and baking processes may be sequentially repeated a plurality of times to further improve mechanical strength of the structure.

The catalyst according to the embodiment includes not only the porous ceramic structure manufactured via the above processes but also the catalyst component supported on the structure.

Here, examples of the catalyst component may include any catalyst component generally used to eliminate noxious materials such as formaldehyde.

In one embodiment, the catalyst component may be a catalyst composition including zeolite, a precious metal supported on the zeolite, and active metal.

In the catalyst composition, zeolite is used as a support containing a precious metal exhibiting catalytic activity. Herein, the term "zeolite" generally refers to crystalline aluminosilicate, including both natural zeolite and synthetic zeolite.

In this embodiment, since zeolite is used as the support for the catalytically active material, it is possible to provide a catalyst composition exhibiting excellent catalytic activity using only a small amount of catalytically active material.

The zeolite may have a specific surface area of 400 m²/g or more, preferably 600 m²/g or more.

Herein, the term "specific surface area" means the surface area of zeolite as the support per unit mass. If the specific surface area of zeolite is less than 400 m²/g, the amount of catalytically active material to be adsorbed thereto can be reduced, thereby decreasing catalytic activity.

Any type of zeolite known in the art may be used in this embodiment.

Examples of zeolite may include mordenite, ferrierite, ZSM-5, β-zeolite, Ga-silicate, Ti-silicate, Fe-silicate, Mn-silicate, and mixtures thereof. Specifically, β-zeolite may be used. β-zeolite exhibits superior porosity and specific surface area to other types of zeolite, thereby further improving the effects of the invention.

The precious metal supported on the zeolite in the catalyst component may be any material which exhibit catalytic activity to decompose and eliminate noxious gases such as formaldehyde.

Examples of the precious metal may include, without being limited to, ruthenium (Ru), rhodium (Rh), palladium (Pd), silver (Ag), osmium (Os), iridium (Ir), platinum (Pt), gold (Au), and mixtures thereof. Specifically, palladium may be used in terms of excellent catalytic activity in consideration of price.

In this embodiment, the precious metal may be present in an amount of 0.25 to 1 part by weight based on 100 parts by weight of zeolite as the support. If the amount of precious metal is less than 0.25 parts by weight, catalytic activity can be reduced. If the amount of precious metal exceeds 1 part by weight, the relative effective area of the zeolite support can be decreased, thereby deteriorating catalytic activity or making a final product too expensive.

The catalyst component may further include active metal. Use of the active metal allows the catalyst composition to exhibit excellent catalytic activity even when including only a small amount of precious metal.

Any any metal having the aforementioned properties may be used as the active metal. For example, the active metal may include manganese (Mn), cerium (Ce), cobalt (Co), and mixtures thereof.

The active metal may be included in the catalyst composition while being supported on the zeolite support along with the precious metal. The content of active metal may be 5 to 20 parts by weight based on 100 parts by weight of zeolite. If the content of active metal is less than 5 parts by weight, the active metal cannot sufficiently contribute to catalytic activity. If the content of active metal exceeds 20 parts by weight, the catalytically active material such as the precious metal can be decreased in amount, thereby deteriorating performance of the catalyst composition.

In this embodiment, the catalyst composition including the above components may be prepared by any known method. For example, the catalyst composition may be prepared using the above components or precursors thereof through impregnation, precipitation, or a sol-gel process.

Further, the catalyst component prepared by the above process may be supported on the porous ceramic structure by any known method. For example, the catalyst component may be supported on the porous structure by immersing the ceramic structure in a slurry or suspension containing the catalyst component or by applying or coating the catalyst component to the structure. Further, the catalyst component may be supported on the porous ceramic structure using a proper binder, as needed.

The present invention also relates to a method of eliminating formaldehyde, which includes bringing the catalyst into contact with formaldehyde.

Specifically, in the method of eliminating formaldehyde, gas including an aldehyde compound to be eliminated is brought into contact with the catalyst according to the embodiment of the invention, so that formaldehyde can be converted into carbon dioxide.

Here, in the method of eliminating formaldehyde, a space velocity in a reactor is 1,000 to 5,000 h⁻¹, preferably 1,000 to 3,500 h⁻¹, and more preferably 1,000 to 2,000 h⁻¹_{.}

Herein, the term "space velocity in a chemical reactor" means a value calculated by dividing a volumetric inflow (m³/h) of gas into the reactor by a reactor volume (m³). For example, supply of a formaldehyde containing gas into a catalytic reactor containing the catalyst according to the embodiment is measured in hourly volume and is divided by the reactor volume to calculate an inflow rate of the formaldehyde containing gas into the reactor.

If the space velocity in the reactor is less than 1,000 h⁻¹, reaction time can be too long for conversion of formaldehyde, thereby reducing efficiency. If the space velocity in the reactor exceeds 5,000 h⁻¹, high-temperatures can be needed to eliminate formaldehyde, thereby decreasing energy efficiency.

The reactor may include any catalytic reactor generally used in catalytic decomposition, and a process using the reactor may be any catalytic decomposition method known in the art.

Further, contact temperature of the aldehyde compound containing gas with the catalyst is not specifically limited, but is in the range of 40 to 300 °C, preferably 40 to 200 °C or more, and more preferably 150 to 200°C.

If the contact temperature is less than 40°C, the reactor must have a lower space velocity corresponding thereto, thereby causing deterioration of efficiency according to reaction time. If the contact temperature exceeds 300°C, significant energy consumption occurs, thereby reducing efficiency.

Here, in the method of eliminating formaldehyde, it should be understood that the space velocity in the reactor and the contact temperature of formaldehyde with the catalyst may be properly adjusted within the above range according to reaction time, energy consumption due to heating, and a desired conversion rate, instead of being limited to specific ranges.

### Examples

Next, the present invention will be described in detail with reference to illustrative examples. However, it should be understood that the present invention is not limited to the following examples.

### Preparation Example 1: Preparation of catalyst component

A catalyst component including 100 parts by weight of β-zeolite, 0.25 parts by weight of palladium (Pd) and 20 parts by weight of manganese (Mn) was mixed with distilled water at a weight ratio of 3:7, thereby preparing a slurry solution. The slurry solution was mixed with a solution including 10 parts by weight of an alumina sol binder at a weight ratio of 1:4, thereby preparing a final slurry solution.

### Preparation Example 2: Preparation of ceramic structure

### (1) Preparation of corrugated ceramic green paper

4g of alumina-silica fiber having an average length of 600 to 1,000 µm was placed in 2,000 ml of water and subjected to strong stirring to disperse the fiber. Subsequently, 25 parts by weight of softwood pulp as organic fiber and 10 parts by weight of an acrylic binder were added to 100 parts by weight of the ceramic fiber.

The pH of the slurry solution was adjusted to about 5.5 by adding 1ml of a 1% ammonium sulfate aqueous solution having a pH of 3. The slurry solution was continuously and gently stirred so that solids were thoroughly mixed with the slurry solution. Then, ceramic green paper having a thickness of 400 µm was prepared using a paper preparation machine. The ceramic green paper was naturally dried at room temperature for 30 minutes and dried in a drying oven at 100°C to remove remaining water.

The prepared green paper was corrugated at a surface temperature of 150°C and at a feeding rate of 2 to 10 m/min using a corrugation machine (KIER, valley: 2 mm, pitch: 3 mm, Hwasung Machinery Co., Ltd.), thereby preparing corrugated ceramic paper.

### (2) Preparation of ceramic paper sheet

Ceramic green paper was prepared using the same process as in (1), except that corrugation was not performed, and was used as a ceramic paper sheet.

### (3) Preparation of ceramic structure

The corrugated ceramic paper and the ceramic paper sheet prepared respectively in (1) and (2) were attached to each other, thereby preparing a paper structure. The paper structure was formed into a cylindrical shape having a diameter of 3.5 cm and a height of 5 cm. Subsequently, the cylindrical green structure was put in a silica sol (Solid concentration: 20%), and dried in an oven at 120°C.

32 g of aluminum acetate was added to 100 g of water and stirred while gently adding 230 g of phosphoric acid, thereby preparing a second coating solution as an inorganic binder precursor. The dried cylindrical green structure was impregnated with the second coating solution, and then the solution remaining in valleys was eliminated.

Then, the structure was naturally dried at room temperature for 1 hour, baked at 950°C for 60 minutes, cooled in a furnace, thereby producing a ceramic structure.

### Example 1

The final slurry solution of the catalyst component prepared in Preparation Example 1 was applied to the ceramic structure prepared in Preparation Example 2 and dried at 110°C. This process was repeated until the catalyst component was applied in an amount of 20% by weight to the ceramic structure. The ceramic structure coated with the catalyst component was baked at 300°C for 5 hours, thereby producing a catalyst.

### Test 1

Results of decomposition of formaldehyde (HCHO) were measured depending on a space velocity (1,000, 3,500, and 5,000 h⁻¹) in a reactor using the catalyst of Example 1. Here, the space velocity in the reactor was calculated by dividing the inflow rate of gas into the reactor by the reactor volume.

Referring to Fig. 2, when the space velocity in the reactor is 5,000 h⁻¹, conversion of formaldehyde at 40°C is 55%. Further, as the space velocity decreases, the conversion of formaldehyde tends to increase. In particular, when the space velocity is 1,000 h⁻¹, the conversion at a low temperature of 40°C is 100%.

## Claims

1. A catalyst comprising:
a ceramic structure containing porous ceramic paper; and
a catalyst component supported on the ceramic structure.

2. The catalyst of claim 1, wherein the ceramic structure comprises corrugated ceramic paper and a ceramic paper sheet attached to the corrugated ceramic paper.

3. The catalyst of claim 1, wherein the ceramic paper comprises ceramic fibers having an average length of 0.6 to 10 mm.

4. The catalyst of claim 1, wherein the ceramic paper has a thickness of 200 to 500 µm.

5. The catalyst of claim 1, wherein the ceramic paper has a porosity of 60 to 90%.

6. The catalyst of claim 1, wherein the catalyst component comprises zeolite, a precious metal supported on the zeolite, and active metal.

7. The catalyst of claims 6, wherein the zeolite has a specific surface area of 400 m²/g or more.

8. The catalyst of claim 6, wherein the zeolite comprises mordenite, ferrierite, ZSM-5, β-zeolite, Ga-silicate, Ti-silicate, Fe-silicate, or Mn-silicate.

9. The catalyst of claim 6, wherein the precious metal comprises at least one selected from the group consisting of ruthenium (Ru), rhodium (Rh), palladium (Pd), silver (Ag), osmium (Os), iridium (Ir), platinum (Pt), and gold (Au).

10. The catalyst of claim 6, wherein the precious metal is present in an amount of 0.25 to 1 part by weight based on 100 parts by weight of zeolite.

11. The catalyst of claim 6, wherein the active metal comprises at least one selected from the group consisting of manganese (Mn), cerium (Ce), and cobalt (Co).

12. The catalyst of claim 6, wherein the active metal is present in an amount of 5 to 20 parts by weight based on 100 parts by weight of the zeolite.

13. A method of eliminating formaldehyde comprising:
bringing the catalyst of any one of claims 1 to 12 into contact with formaldehyde.

14. The method of claim 13, wherein a space velocity in a reactor is 1,000 to 5,000 h⁻¹.

15. The method of claim 14, wherein a contact temperature is 40 °C or more.
